# EUROPÄISCHE PATENTSCHRIFT

(11) **EP 2 540 629 B1**
(45) Veröffentlichungstag und Bekanntmachung des Hinweises auf die Patenterteilung: **08.05.2019**
(21) Anmeldenummer: 12174498.1
(22) Anmeldetag: 29.06.2012
(51) Int. Cl.: B65B 43/46, B65B 43/54, B65B 57/02, B65B 57/08, B65B 39/02, B65B 39/12

(54) **Greifanordnung für die automatisierte Handhabung von Großsäcken (Big Bags)**
Gripping assembly for the automated handling of big bags
Dispositif de préhension pour la manipulation automatisée de gros sacs (Big Bags)

(30) Priorität: 29.06.2011 DE 102011105967
(43) Veröffentlichungstag der Anmeldung: 02.01.2013
(73) Patentinhaber: EMDE Industrie-Technik Gesellschaft für Rationalisierung und Verfahrenstechnik mbH, 56377 Nassau (DE)
(72) Erfinder: Aulmann, Ralf, 56355 Winterwerb (DE); Emmel, Klaus, 56370 Rettert (DE); Seidel, Erik, 56355 Nastätten (DE); Zirwes, Patrick, 56865 Hesweiler (DE)
(74) Vertreter: Gerhard, Till

(56) Entgegenhaltungen:
- EP-A1- 2 100 813
- WO-A1-2011/016968
- WO-A2-2008/064652
- DE-A1-102008 036 501
- US-A1- 2010 281 822

## Beschreibung

Die vorliegende Erfindung betrifft eine Greifanordnung für die automatisierbare Handhabung von Großsäcken.

Großsäcke, auch "Big Bags" genannt, dienen zum Umschlag von fliesfähigen Schüttgütern. Zum Befüllen werden die Großsäcke meist an vier Eckschlaufen, die an den Ecken der etwa quadratischen Oberseite des Großsacks angeordnet sind, in einer Füllstation eingehängt. Anschließend wird der Großsack üblicherweise über einen Einfüllstutzen an der Oberseite befüllt, indem in diesen Einfüllstutzen ein Füllrohr eingeführt wird, das an der Füllstation angeordnet ist.

Um den Durchsatz solcher Füllstationen zu erhöhen, wird eine weitgehende Automatisierung der damit zusammenhängenden Tätigkeiten angestrebt. Dies betrifft sowohl das Aufnehmen der anfangs flach zusammengefalteten Großsäcke, die mehr oder weniger ungeordnet auf einem Stapel bereitgestellt werden, als auch das Übergeben und Fixieren des Großsacks in die Füllstation.

Zum automatisierten Handhaben des leeren Großsacks dienen beispielsweise Vakuumsauger, während der Großsack beim Befüllen wegen der Gewichtsbelastung an seinen Tragschlaufen fixiert wird. Eine solche Vorrichtung ist aus der WO 2008/064652 A2 bekannt. Hier sind spezielle Einrichtungen erforderlich, um die Tragschlaufen so zu positionieren, dass sie in speziellen Greifvorrichtungen der Füll- oder Verarbeitungsstation fixiert werden können.

Die US 2010/0281822 A1 offenbart eine Zufuhranordnung zur fortwährenden Zufuhr von vorgeformten Taschen in eine Füll-Verschließmaschine. Dabei ist eine Roboteranordnung vorgesehen, die zwischen einer Taschenzufuhreinrichtung und der Füllstation der Befüllungs-Versiegelungsmaschine angeordnet ist. Die Robotereinrichtung umfasst einen optischen Sensor, der in einem Greifelement angeordnet ist. Im Betrieb scannt der Sensor Bezeichnungen, um die Eigenschaften der Taschen zu bestimmen.

WO 2011/016 968 A1 offenbart eine Greifanordnung gemäß dem Oberbegriff des Anspruchs 1 und 2. Dieses Dokument beschreibt ein Verfahren zum Bilden von Schichtstapeln von Packstücken mittels einer Greifvorrichtung, die eine erste Greifanordnung und eine zweite Greifanordnung umfasst. Dabei ist jede der Greifanordnungen geeignet, jeweils ein Packstück aufzunehmen. Die Greifanordnungen sind so verstellbar, dass die Positionierung und Lage der aufgenommenen Packstücke zu einander variabel gestaltet werden kann.

Zur Aufnahme der Tragschlaufen von Großsäcken sind die dort angegebenen Vorrichtungen jedoch nicht geeignet.

Davon ausgehend besteht die Aufgabe, eine Greifanordnung für die automatisierbare Handhabung von Großsäcken bereitzustellen, welche die Handhabung vereinfacht oder verbessert und die erforderlichen Komponenten zur Handhabung des Großsacks reduziert, verbessert und/oder vereinfacht.

Diese Aufgabe löst die Greifanordnung gemäß Anspruch 1 oder 2, in der eine Sensoranordnung vorgesehen ist, welche die Lage des Großsacks, z.B. auf einem Stapel, und/oder die Lage einer Greifzone an einem am Großsack angeordneten Tragmittel, nämlich eine Tragschlaufe, bezüglich des Großsacks erfasst. Zusätzlich weist die Greifanordnung mehrere Greifeinrichtungen zum Aufnehmen und Handhaben des Großsacks an an den Tragmitteln - den Tragschlaufen - bzw. an den Greifzonen auf. Weiter ist eine Stelleinrichtung zum Einstellen der Greifeinrichtung bezüglich der erfassten Lage des Großsacks bzw. der Greifzone vorgesehen. Mittels der Stelleinrichtung ist die Greifeinrichtung zwischen einer Ruhelage, in der beispielsweise die Greifeinrichtung über ein Handhabungsgerät an einen Großsack herangeführt wird, einer Greiflage und einer Handhabungslage verstellbar. In der Greiflage ist die Greifeinrichtung so angeordnet, dass das Tragmittel an der von der Sensoreinrichtung erfassten Greifzone aufnehmbar ist. In der Handhabungslage ist der Großsack, der mit seinen Tragmitteln in der Greifeinrichtung oder den Greifeinrichtungen aufgenommen ist, handhabbar und kann dabei z.B. zwischen einem Vorratsstapel und einer Füllstation gefördert werden. Gleichzeitig sind in Handhabungslage die aufgenommenen Tragmittel in einer definierten Lage angeordnet, in der sie in der Verarbeitungsstation (z.B. eine Füllstation) fixierbar sind. Damit ist eine gesonderte Positionierung des Tragmittels zur Aufnahme in der Verarbeitungsstation nicht erforderlich.

Ein Aktuator und ein damit betätigbares Aufnahmemittel ist vorgesehen, das zwischen einer Freigabestellung und einer Haltestellung verstellbar ist. In seiner Haltestellung fixiert das Aufnahmemittel das Tragmittel (Halteschlaufe) und in seiner Freigabestellung gibt es dieses frei. Die Verstellbarkeit zwischen Halte- und Freigabestellung ermöglicht ein gesteuertes Aufnehmen und ggf. eine Übergabe in eine Aufhängevorrichtung (z.B. einer Füllstation).

Dadurch, dass mehrere Greifeinrichtungen verstellbar an einem Tragrahmen angeordnet sind, können diese Greifeinrichtungen über die Stelleinrichtung unabhängig voneinander verstellbar angeordnet werden. So können die Tragmittel weitgehend unabhängig von deren Lage zum Großsack bzw. unabhängig von der Lage der Greifzonen aufgenommen werden. Jede Greifeinrichtung wird in die dem jeweiligen Tragmittel bzw. dessen Greifzone entsprechende Greiflage verstellt.

Das Aufnahmemittel selbst kann aus zwei zueinander verstellbaren Greifelementen gebildet werden, die beispielsweise als Greiffinger bzw. Greif- oder Klemmbacken ausgebildet sind, mit denen das Tragmittel bzw. die Greifzone am Tragmittel in nahezu jeder beliebigen Lage aufgenommen (eingeklemmt) werden kann. Dabei spielt die Art und Form des Tragmittels, das normalerweise als angenähtes Textilband bzw. Bandschlaufe ausgebildet ist, kaum eine Rolle.

In einer anderen Ausführung ist das Aufnahmemittel als Aufnahmehaken ausgebildet, der besonders gut zur schonenden Aufnahme von Schlaufen geeignet ist.

In einer Weiterbildung einer dieser Ausführungen ist der Aktuator ein Antrieb, der über ein ggf. kraftverstärkendes Getriebe mit dem Aufnahmemittel gekoppelt ist. Dabei haben sich Linearantriebe wie Fluidzylinder bewährt. Die Kraftverstärkung ermöglicht kleine kompakte Antriebe, die beispielsweise drucklos durch Federelemente in ihre Haltestellung gebracht werden. Damit ist die Haltefunktion auch bei unterbrochener Stromversorgung gewährleistet.

Es gibt auch Ausführungen, bei denen das Getriebe einen Kniehebelmechanismus umfasst, der das Aufnahmemittel in seiner Haltestellung sperrt, so dass in dieser Stellung der Antrieb weitgehend last- bzw. kräftefrei ist und so auch gegen Überlastungen geschützt ist.

Dabei können die Klemmbacken zur zusätzlichen Schonung des Gewebes mit von Klemmkanten ausgehenden Klemmplatten versehen sind, die in der Haltestellung flach aneinander liegen und das Tragmittel flächig einklemmen. Die Beanspruchung der Tragmittel wird so herabgesetzt, Scheuerschäden werden vermieden und die Standzeit der Großsäcke wird verlängert (mehr Nutzungszyklen).

Von den Klemmplatten ausgehende, abgewinkelte Führungsflächen (z. B. waagerecht und/oder senkrecht verlaufend) können so ausgebildet sein, dass sie die Tragmittel (Textilband oder Bandschlaufe) vollständig freigeben wenn die Klemmbacken ihre Freigabestellung einnehmen. Die Führungsflächen bilden Abgleitbereiche, die verhindern, dass sich die Tragmittel bei ihrer Freigabe durch die Klemmbacken oder Klemmplatten, nicht am Aufnahmemitteln bzw. den Greifelementen "verheddern" oder hängen bleiben. Die Tragmittel gleiten zuverlässig aus den Greifelementen. Die Führungsflächen unterstützen einen störungsarmen Dauerbetrieb und verringern zusätzlich den Verschleiß der Tragmittel.

Geeignete Stelleinrichtungen können als Linearantrieb oder als Schwenkantrieb ausgebildet sein. Spindelantriebe bieten dabei eine hohe Stellgenauigkeit und sind einfach ansteuerbar.

Zum Erfassen der Lage einer Greifzone gibt es Greifanordnungen, bei welchen die Sensoreinrichtung derart ausgebildet ist, dass sie beim Verstellen der Greifeinrichtung aus der Ruhelage in die Greiflage ein Merkmal erfasst, das die Greifzone des Tragmittels vom Großsack differenziert, und damit auch die Lage der Greifzone bezüglich des Großsacks. So ein differenzierendes Merkmal kann ein Farb- oder Kontrastunterschied sein. Es sind aber auch andere erfassbare Eigenschaften wie elektrische Leitfähigkeit, Oberflächenstruktur, Induktivität, etc. geeignet.

In einer Ausführung, bei der die Sensoreinrichtung als optischer Objekterkennungssensor ausgebildet ist, kann eine Einrichtung gleichzeitig die Lage der Greifzonen mehrerer Tragmittel bezüglich des Großsacks erfassen. Solche optischen Objekterkennungssensoren sind z.B. einfache Kameraelemente, welche ein Kontrastbild des erfassten Objekts liefern. Solche Bilder reichen jedoch aus, um die Greifzonen bzw. die Tragmittel bezüglich des Großsacks oder die Lage des Großsacks selbst hinreichend zu lokalisieren. Sind die Tragmittel in einer festgelegten Anordnung auf der Oberseite eines Großsacks angeordnet, z.B. diagonal nach innen gefaltet, so kann über die Lage der Tragmittel auch die Positionierung des Großsacks auf einen Stapel erfasst und ggf. verarbeitet werden.

In einer weiteren Ausführung ist zusätzlich eine Steuerung vorgesehen, welche auf eine Lageinformation der Sensoranordnung ein entsprechendes Stellsignal an die Stelleinrichtung abgibt, so dass diese die Greifeinrichtung in ihre Greiflage bringt und dann ein Stellsignal an den Aktuator abgibt, so dass dieser das Aufnahmemittel in seine Haltestellung bringt, in der die Greifeinrichtung das Tragmittel an der Greifzone aufnimmt. Mit so einer Steuerung können die erfassten Tragmittel wiederholgenau an den geeigneten Greifzonen aufgenommen werden.

Ausführungsbeispiele der vorliegenden Erfindung werden nachfolgend anhand der Figuren beschrieben. Darin zeigt:
- Figur 1: eine automatisierte Big Bag-Füllstation mit einer Robotereinheit, welche eine erfindungsgemäße Greifanordnung umfasst;
- Figur 2: eine perspektivische Ansicht von schräg unten einer erfindungsgemäßen Greifanordnung;
- Figur 3: die in Figur 2 gezeigte Greifanordnung in einer Ansicht von unten;
- Figur 4: eine schematische Draufsicht auf die Oberseite eines Big Bags;
- Figur 5: eine perspektivische Seitenansicht einer verstellbaren Greifeinrichtung und die dazugehörige Stelleinrichtung;
- Figur 6: Detail A aus Figur 5;
- Figur 6A: eine Greifeinrichtung mit alternativ gestalteten Haltemitteln (Klemmbacken)
- Figur 7: eine Seitenansicht der in den Figuren 5 und 6 dargestellten Greifeinrichtung in Haltestellung und
- Figur 8: die in Figur 7 dargestellte Greifeinrichtung in Freigabestellung.

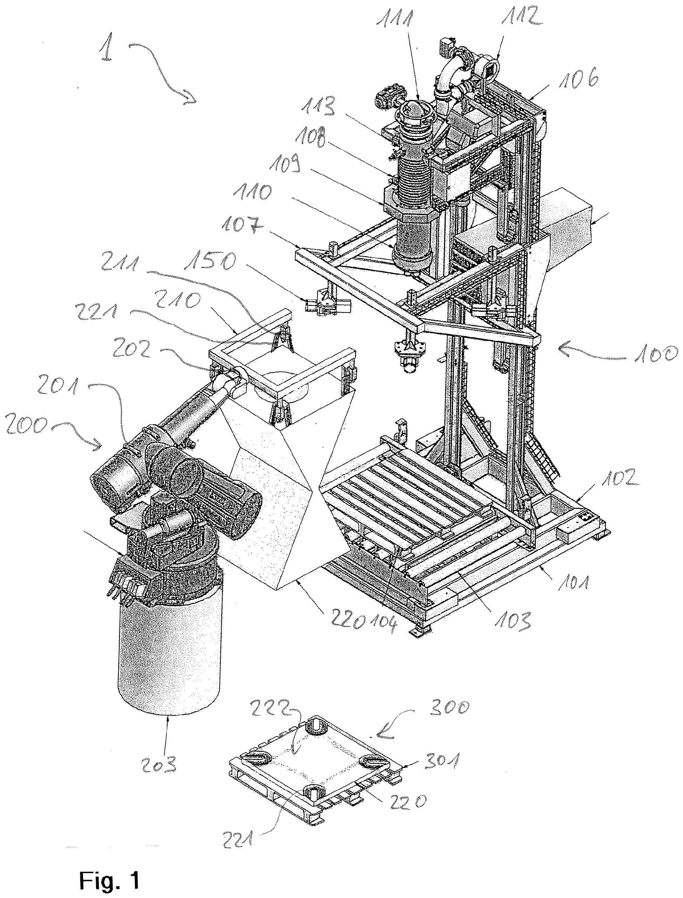

Figur 1 zeigt eine automatisierte Füllstation 1 für Großsäcke (Big Bags), die drei Haupteinheiten umfasst: die Befülleinheit 100, die Big Bag-Zuführeinheit 200 und der Big Bag-Vorrat 300.

Die Befülleinheit 100 umfasst einen Grundrahmen 101, der einen Wägerahmen 102 aufnimmt, der über Wägezellen mit dem nivellierten Grundrahmen 101 gekoppelt ist. Auf dem Wägerahmen ist ein Rollenbahnabschnitt 103 vorgesehen, der eine Palette 104 zur Aufnahme eines befüllten Großsacks 220 trägt (nicht dargestellt). Vom Wägerahmen 102 aus erstreckt sich ein Aufnahmeständer 106, der einen vertikal verstellbaren Hubrahmen 107 aufnimmt. Oberhalb des Hubrahmens nimmt der Aufnahmeständer 106 einen ebenfalls vertikal verstellbaren Füllkopfhubrahmen 108 auf. Dieser trägt eine Füllkopfeinheit 109 mit einer Blähmanschette 110, einem Ventil 111 und einer Luftzufuhr 112. Der Hubrahmen 107 dient als Aufnahmeanordnung und weist vier Aufhängeeinrichtungen 150 auf, die dazu dienen, einen in der Befülleinheit 100 befindlichen Großsack 220 zu halten (in Figur 1 nicht in der Befülleinheit 100 dargestellt).

Die Zuführeinheit 200 umfasst einen mehrachsigen Industrieroboter 201, der über eine Schnittstelle, die als Aufnahmekopf 202 ausgebildet ist, einen als Greifanordnung dienenden U-förmigen Greifrahmen 210 trägt, an dem vier verstellbare Greifeinrichtungen 211 angeordnet sind, die jeweils eine als Tragmittel dienende Eckschlaufe 221 am Großsack 220 halten. Der Industrieroboter 201 ist auf einem Sockel 203 angeordnet. In anderen Ausführungen ist der Greifrahmen 210 geschlossen oder hat eine andere geeignete Gestalt.

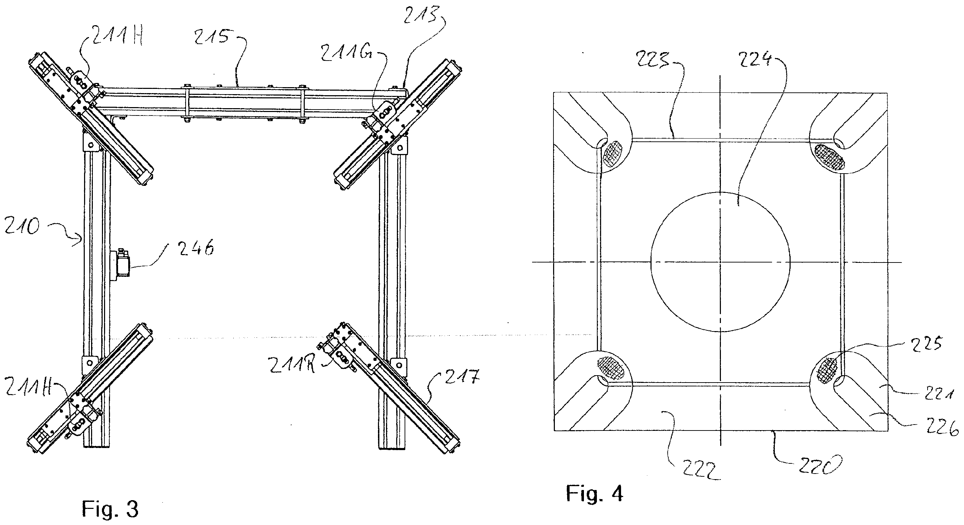

Das dritte Element der Füllstation bildet ein Großsackvorrat 300, der aus auf einer Palette 301 gestapelten, flach zusammengefalteten Großsäcken 220 gebildet wird, deren Eckschlaufen 221 diagonal nach innen gefaltet, flach auf der Oberseite 222 des Großsacks 220 liegen. Sie werden in dieser Lage von einem durch die Eckschlaufen 221 verlaufenden elastischen Element gehalten, das als flexibles Gummiband 223 ausgebildet ist und unter leichter Spannung steht, so dass die Eckschlaufen 221 in ihrer Position gehalten werden (vgl. auch Figur 4). Die Enden der Eckschlaufen 221 weisen dabei diagonal zur Mitte der Oberseite 222 des Großsacks 220, wo ein flexibler auf den Durchmesser der Füllkopfeinheit 109 abgestimmter Füllstutzen 224 angeordnet ist. Die Eckschlaufen 221 können auch über lösbare Klebepunkte oder aufreißbare Heftnähte, Anheftfäden, sog. Loop Pins o.Ä. fixiert und positioniert werden.

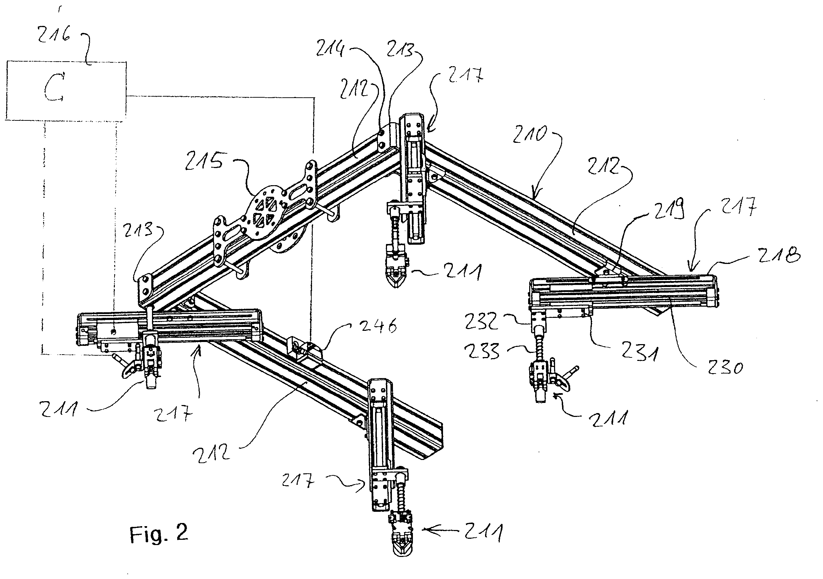

Figur 2 zeigt den als Greifanordnung dienenden Greifrahmen 210 mit seinen verstellbaren Greifeinrichtungen 211 genauer. Im dargestellten Ausführungsbeispiel ist der Greifrahmen 210 aus drei etwa gleich langen Mehrzweckprofilen 212 über Verbindungslaschen 213 und Schraubelemente 214 zusammengefügt.

In anderen Ausführungen ist der Greifrahmen einstückig aus einem gebogenen Tragprofil oder auch als Schweißkonstruktion ausgebildet. Es gibt auch Ausführungen, bei denen der Greifrahmen 210 geschlossen ausgeführt ist.

Die Schnittstelle 202 am Industrieroboter 201 ist mit einem Koppelstück 215 am Greifrahmen 210 koppelbar. Über das Koppelstück 215 können auch Leitungen zur Informations- bzw. Energieübertragung mit einer Steuer-/Antriebseinheit 216 verbunden werden.

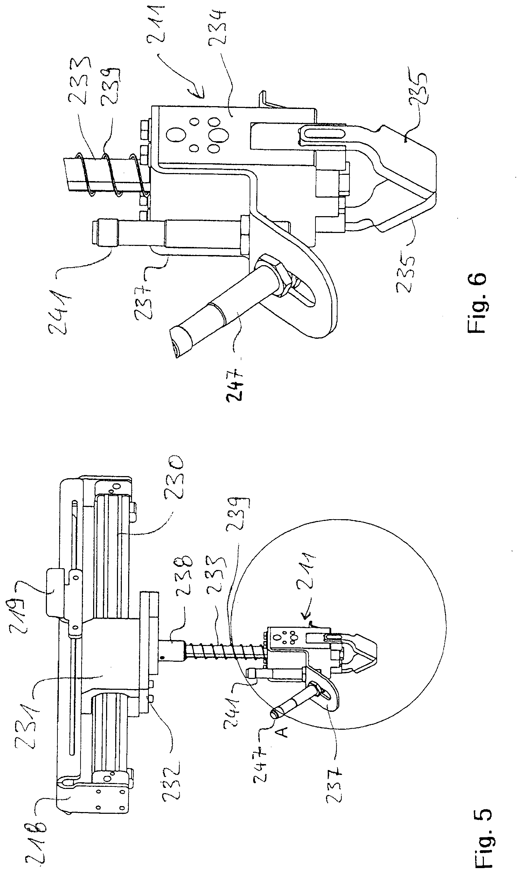

An jeder Ecke des Greifrahmens 210 ist eine Greifeinrichtung 211 vorgesehen, die an einer Stelleinrichtung 217 angeordnet ist, die über einen Stellzylinder 218 und entsprechende Klemmschuhe 219 an den Mehrzweckprofilen 212 des Greifrahmens fixiert sind. Die Stelleinrichtung umfasst einen entlang des Stellzylinders 218 verstellbaren Stellkolben 230 mit einer Stelleinheit 231, an der über eine Haltelasche 232 die Greifereinrichtung 211 über einen federnd geführten Teleskopstab 233 befestigt ist (vgl. auch Figur 5).

Die Stellzylinder 218 und damit die Stelleinrichtungen 217 verlaufen diagonal zu den Profilen 212 des Greifrahmens 210 und sind mit ihren Enden auf einen Mittelpunkt ausgerichtet. Die Figuren 3 und 4 zeigen, dass die Abmessungen des Greifrahmens 210 etwa der Außenkontur des von oben dargestellten Großsacks 220 entsprechen und die Stelleinrichtung 217 so am Greifrahmen 210 angeordnet sind, dass die Stellzylinder 218 und damit die Stellkolben 230 im Bereich der diagonal aufliegenden Eckschlaufen 221 verlaufen. Damit sind die Stelleinheiten 231 mit ihrer jeweiligen Greifeinrichtung 211 dem Verlauf der Eckschlaufen 221 folgend diagonal nach außen und innen verstellbar.

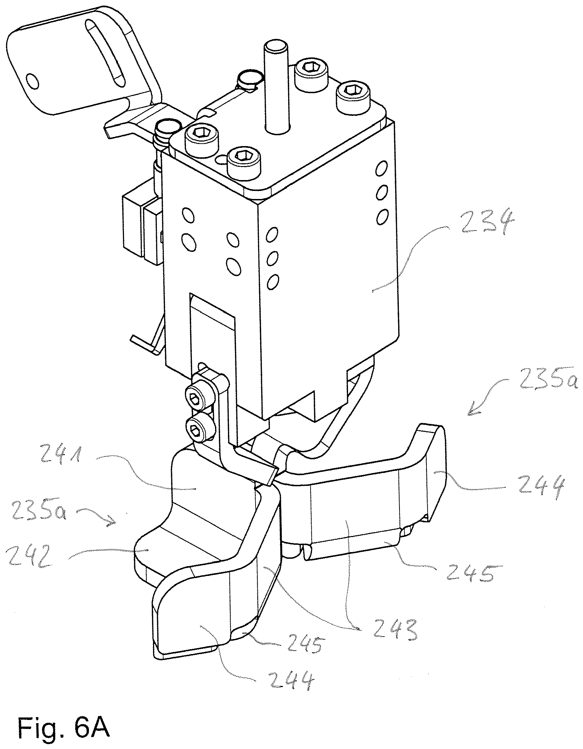

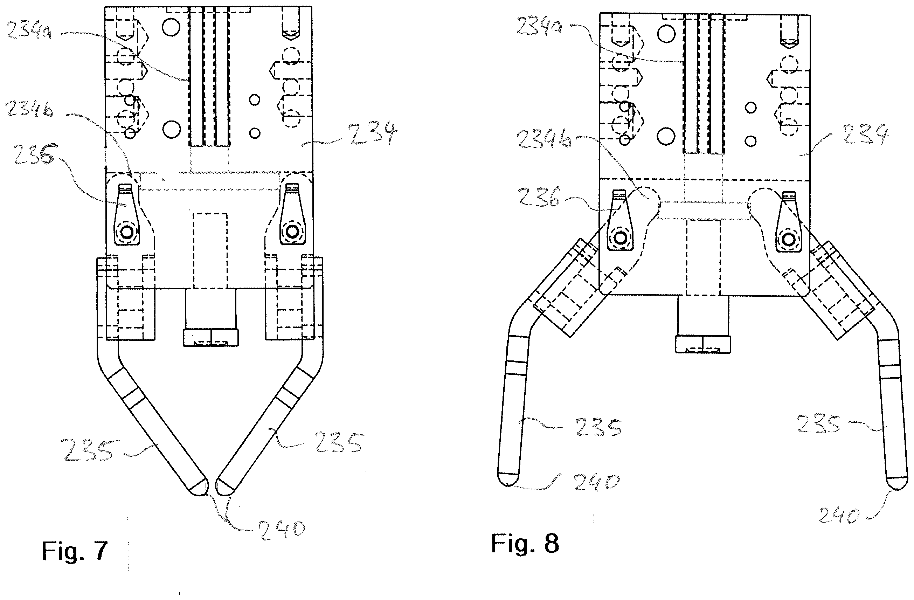

Die Figuren 6 bis 8 zeigen die Greifeinrichtung 211 genauer. Sie umfasst einen Aktuator 234, der einen pneumatisch betätigbaren Linearantrieb 234a umfasst, welcher über ein Getriebe 234b als Greifbacken 235 ausgebildete Greifelemente betätigt und diese zwischen einer Freigabestellung (Figur 8) und einer Haltestellung (Figur 7) verstellt. Ein in Figur 7 angedeuteter Kniehebelmechanismus 236 sperrt dabei die Greif- bzw. Klemmbacken 235 in ihrer Haltestellung und entlastet damit Getriebe 234b und Linearantrieb 234a. Der Linearantrieb 234a ist als doppelt wirkender Pneumatikzylinder ausgebildet, der die Greifeinrichtung 211 in ihre Haltestellung bringt. Je nach Druckluftzufuhr stellt der Pneumatikzylinder die Greifeinrichtung 211 in ihre Halte- oder Freigabestellung. In einer anderen Ausführung ist der Linearantrieb als drucklos verstellbarer Fluidzylinder mit Stellfeder ausgebildet, welche die Greifeinrichtung in ihre Haltestellung bringt. Bei Druckluftzufuhr stellt der Fluidzylinder die Greifeinrichtung 211 in ihre Freigabestellung. Bei dieser Ausführung kann die Greifeinrichtung 211 ohne Energiezufuhr in ihrer Haltestellung bleiben.

Die Greifeinrichtung 211 ist über eine Mehrzwecklasche 237 mit dem Ende des Teleskopstabs 233 verbunden. Der Teleskopstab 233 ist linear verschiebbar in einer Gleitbuchse 238 angeordnet. Zwischen der Gleitbuchse 238 und der Mehrzwecklasche 237 verläuft eine den Teleskopstab 233 umgebende Feder 239, die unabhängig von der Raumlage des Greifrahmens 210 die Greifeinrichtung 211 in ihrer "unteren" Stellung hält.

Die Klemmbacken 235 weisen an ihren Enden abgerundete Klemmflächen 240 auf (vgl. Figur 7 und 8), deren Abstand in der Haltestellung so eingestellt ist, dass ein zwischen den Klemmflächen 240 eingeklemmtes Gewebe einer Eckschlaufe 221 einerseits unbeschädigt bleibt, aber andererseits so fest eingeklemmt ist, dass der an den Eckschlaufen 221 hängende leere Großsack 220 auch bei hohen Verfahrgeschwindigkeiten des Industrieroboters 201 sicher handhabbar bleibt, ohne sich aus den Greifeinrichtungen 211 zu lösen.

Fig. 6A zeigt eine Greifeinrichtung 211 mit alternativ gestalteten Klemmbacken 235a. In senkrechter Verlängerung nach unten sind von den Klemmflächen 240 ausgehend Klemmplatten 241 ausgebildet, die das eingeklemmte Gewebe der Eckschlaufen 221 flächig und damit besonders gewebeschonend aufnehmen können.

Zusätzlich (optional) sind waagerecht 242 und senkrecht verlaufende Führungsflächen 243, 244 dargestellt. Die waagerechten Führungsflächen 242 sind an den nach unten weisenden waagererecht verlaufenden Kanten (Klemmflächen 240) der Klemmplatten 241 als Abkantungen nach außen ausgebildet. Die senkrechten Führungsflächen 243, 244 gehen von den senkrecht verlaufenden Seitenkanten der gegenüber liegenden Klemmplatten 241 aus und sind ebenfalls als abgekantete Laschen ausgebildet. Sie definieren ein sich - von den Seitenkanten ausgehend - öffnendes V. Die Führungsflächen 243 und 244 sind dabei zueinenander abgewinkelt. Von der unteren Kante der Führungsfläche 243 ausgehend verläuft eine weitere waagerechte Führungsfläche 245 in der gleichen Ebene wie die waagerechte Führungsfläche 242.

Die Klemmbacken 235, 235a sind einstückig als gekantetes Blechteil ausgeführt. In anderen Ausführungen sind aber auch Guss-, Form- oder Schweißkonstruktionen möglich.

Im Betrieb stellen die Führungsflächen 242,245,244 und 245 sicher, dass auch teilweise eingeklemmte Eckschlaufen 221 weder beim Verfahren der Greifeinrichtungen 211 in die Handhabungslage (diagonal nach außen mittels der Stelleinrichtungen 217) noch bei der Übergabe der Schlaufen 221 in die Aufhängeeinrichtungen 150 an den Klemmbacken 235a hängen bleiben. Die Führungsflächen 242, 245, 255, und 245 stellen sicher, dass auch ungünstig verformte oder stark gespannte Schlaufen weder an den Klemmbacken 235a selbst, am Aktuator 234 noch an anderen Anbauteilen (z.B. Sensor 247, Mehrzwecklasche 237) hängen bleiben und sauber aus dem Klemmbereich der Klemmplatten 241 gelangen, wenn diese geöffnet werden.

Es gibt auch Ausführungen, bei denen anstelle der Greifeinrichtung 211 mit Klemmbacken 235 sogenannte Nadelgreifer vorgesehen werden, um die Eckschlaufen 221 zu fixieren. Bei Nadelgreifern durchsetzen schräg zueinander verstellbare Nadelbündel einen Gewebebereich (hier die Tragschlaufen 221) und fixieren so das Gewebe und damit verbundene Bauteile (hier den Großsack 220). Beim Zurückziehen der Nadelbündel wird das Gewebe wieder freigegeben.

Die Mehrzwecklasche 237 trägt in einer Ausführung einen optischen Sensor 241 sowie einen Erfassungssensor 247, der eine in der Greif-/Klemmbacken 235 erfasste Tragschlaufe 221 detektiert. Der optische Sensor 241 erfasst den unmittelbar neben den Greif-/Klemmbacken 235 verlaufenden Bereich an der Oberseite eines Großsacks 220 und gibt auf einen Kontrast- bzw. Farbwechsel hin ein Signal an die Antriebs-/Steuereinheit 216 ab. So ein Kontrast- oder Farbwechsel wird beispielsweise beim Übergang vom hellen Großsackgewebe zum dunklen Eckschlaufengewebe detektiert.

Ergänzend oder alternativ ist am Greifrahmen 210 ein als Kameraeinheit 246 ausgebildeter optischer Objekterkennungssensor angeordnet, welcher in einer bestimmten Lage des Greifrahmens 210 über dem Großsackvorrat 300 die gesamte Oberseite 222 des obersten Großsacks 220 erfasst und die entsprechenden Bildinformationen an die Antriebs-/Steuereinheit 216 abgibt. Diese steuert die Greifeinrichtung 211, die Stelleinrichtungen 217 und ggf. den Industrieroboter 201.

Die automatisierte Handhabung eines Großsacks 220 zum Aufnehmen desselben vom Großsackvorrat 300 und zum Einbringen in die Befülleinheit 100 läuft folgendermaßen ab:
Zum Aufnehmen eines Großsacks 220 vom Großsackvorrat 300 verfährt der Industrieroboter 201 den leeren Greifrahmen 210 über den Großsackvorrat 300, so dass der Greifrahmen 210 so zum obersten Großsack 220 ausgerichtet ist, dass die Stelleinrichtungen 217 etwa entlang der Eckschlaufen 221 verlaufen. Die Ausrichtung, die über die Kameraeinheit 246 erfasst wird, ergibt sich, wenn man den Greifrahmen 210 in Figur 3 gedanklich über den in Figur 4 dargestellten Großsack 220 schiebt. Die Greifreinrichtungen 211 befinden sich dabei in ihrer Ruhelage, d.h. sie sind alle bis zum Anschlag in Richtung Füllstutzen 224 verstellt. In Figur 3 ist die Greifeinrichtung 211R in ihrer Ruhelage dargestellt.

In einer anderen Ausführung dient der optische Sensor 241 auch dazu, die Ausrichtung des obersten Großsacks 220 zu erfassen. Dazu dienen kontrastierende Nähte, die die Außenkontur der Oberseite 222 oder die Anschlusskontur des Einfüllstutzens markieren. Verlauf und Lage dieser Nähte werden durch mehrmaliges Überfahren mit dem optischen Sensor 241 erfasst und dazu genutzt, den Greifrahmen 210 entsprechend auszurichten.

Der Greifrahmen 210 wird so weit abgesenkt, bis ein Näherungssensor einen bestimmten Abstand meldet. Der optische Sensor 241 erfasst nun die Oberseite 222 des Großsacks 220, die beispielsweise hell eingefärbt ist. In dieser Stellung verfährt nun die Stelleinrichtung 217 durch Verschieben der Stellkolbens 230 die Stelleinheit 231 zusammen mit der Greifeinrichtung 211 nach außen. Dabei erfasst der optische Sensor 241 einen Farb- oder Kontrastwechsel, wenn er aus dem Bereich der (hellen) Großsackoberseite 222 von innen diagonal nach außen in den Bereich der Eckschlaufe 221 gelangt. Die Eckschlaufen 221 sind in kontrastierender Farbe zur Großsackoberfläche 222 ausgeführt (z.B. aus einem dunklen oder schwarzen hochfesten Textilgurtgewebe). Auf das Kontrastwechselsignal hin, welches an eine Antriebssteuereinheit 216 (Figur 2) oder aber auch direkt an die Stelleinrichtung 217 abgegeben wird, stoppt die Bewegung der Greifeinrichtung 211 sofort oder nach einer angemessenen Nachlaufzeit, so dass die Greif-/Klemmbacken 235; 235a der Greifeinrichtung 211 exakt über einer Greifzone 225 auf der Eckschlaufe 221 verlaufen. Die Greifeinrichtung befindet sich nun in ihrer Greiflage (siehe Figur 3, Greifeinrichtung 211G). Wenn alle Greifeinrichtungen 211 so in ihre Greiflage gebracht sind, verfährt der Industrieroboter 201 den Greifrahmen 210 weiter nach unten in Richtung Oberseite 222 des Großsacks 220 bis die Klemmflächen 240 (Führungsflächen 242, 245) der Greif-/Klemmbacken 235 (235a) auf der Greifzone 225 aufsetzen. Die Greifeinrichtungen 211 befinden sich dabei in ihrer Freigabestellung (Figur 8). Das Aufsetzen kann entweder durch einen Näherungssensor oder aber auch über eine am Teleskopstab 233 vorhandene Schaltung erfasst werden.

Liegen alle Klemmflächen 240 (Führungsflächen 242, 245) auf den Greifzonen 225 auf, verstellt der Aktuator 234 die Greif-/Klemmbacken 235;235a in ihre Haltestellung (Figur 7). Dabei erfassen die Greif-/Klemmbacken 235 die Eckschlaufen 221 und klemmen diese zwischen den Klemmflächen 240 (Klemmplatten 241) ein. Der Erfassungssensor 247 erfasst dabei die eingeklemmten Eckschlaufen 221 und gibt ein entsprechendes Signal ab.

Der Industrieroboter 201 hebt nun den noch zusammengefalteten Großsack 220 vom Großsackvorrat 300 ab. Figur 1 zeigt einen durch Schwerkraft weitgehend entfalteten Großsack 220, der an den Eckschlaufen 221 hängend in den Greifeinrichtungen 211 gehalten ist. Zur Übergabe in die Befülleinheit 100 verfährt nun der Industrieroboter 201 den Greifrahmen 210 zusammen mit dem Großsack 220 in den Bereich des Hubrahmens 107, so dass die Eckschlaufen 221 in den Bereich der Aufhängeeinrichtungen 150 gelangen. Anschließend bringen die Stelleinrichtungen 217 die Greifeinrichtungen 211 in ihre Handhabungslage, d.h. sie verfahren die Greifeinrichtung 211 diagonal nach außen (Figur 3, Greifeinrichtungen 211H), so dass der Großsack an den weitgehend senkrecht nach unten verlaufenden Eckschlaufen 221 hängt. Dabei wird das elastische Element 223 ebenfalls nach außen gedehnt, wobei dessen Elastizität so gewählt ist, dass es die Handhabung der Eckschlaufen 221 durch die Greifeinrichtung 211 in keiner Weise beeinträchtigt. Die Aufhängeeinrichtungen 150 erfassen die Eckschlaufen 221 unterhalb der Greifeinrichtungen 211. Dann werden die Greifeinrichtungen 211 in ihre Freigabestellung geschaltet, die Greif-/Klemmbacken 235; 235a geben die Eckschlaufen 221 frei und der Greifrahmen 210 kann wieder aus dem Hubrahmenbereich verfahren werden. Der Großsack 220 verbleibt an den Aufhängeeinrichtungen 150 hängend in der Befülleinheit 100 und wird dort befüllt.

In einer alternativen Ausführung wird die Positionierung des Greifrahmens 210 über dem Großsackvorrat 300 und die Einstellung der Stelleinrichtungen 217 ausschließlich über die Kamera 246 gesteuert, die die gesamte Oberseite 222 des obersten Großsacks 220 auf dem Großsackvorrat 300 erfasst und diese optische Information an die Antriebs-/Steuereinheit 216 liefert. Diese ermittelt daraus entsprechende Stellsignale zur Ausrichtung des Greifrahmens 210 durch den Industrieroboter 201 und gleichzeitig die Lage der Greifzonen 225 an den Eckschlaufen 221. Über entsprechende Signale werden die Stelleinrichtungen 217 und die Greifeinrichtungen 211 jeweils in die gewünschte Greiflage gebracht, so dass die Greifeinrichtungen 211 die jeweiligen Greifzonen 225 bzw. die Eckschlaufen 221 mit den Greif-/Klemmbacken 235 erfassen und handhaben können.

In Figur 4 sind die Greifzonen 225 auf den Schlaufenenden der Eckschlaufen 221 gekennzeichnet. Alternativ kann auch der offene Schlaufenbereich 226 als Greifzone identifiziert werden, nämlich für den Fall, dass anstelle der Greif-/Klemmbacken 235; 235a z.B. ein verstellbarer Aufnahmehaken als Aufnahmemittel dient. So ein Aufnahmehaken kann dann über die Stelleinrichtung 217 gesteuert in den offenen Schlaufenbereich 226 eingebracht werden und in die Eckschlaufe 221 eingeschwenkt werden, so dass der Großsack 220 sehr materialschonend zu handhaben ist.

Bei so einer Ausführung ist es auch möglich, den gesamten Greifrahmen 210 in entsprechende Halterungen des Hubrahmens 107 der Befülleinheit einzuführen, an der Schnittstelle 202 des Industrieroboters 201 bzw. des Koppelstücks 215 am Greifrahmen 210 abzukoppeln und zum Befüllen in der Befülleinheit 100 zu belassen. Dazu sind dann in der Befülleinheit 100 entsprechende Anschlüsse für die Betätigung der Greifeinrichtungen 211 vorgesehen, die dann zum Absetzen des gefüllten Großsacks auf der Palette 104 aus den Eckschlaufen 221 ausgeschwenkt werden können. Anschließend wird dann der leere Greifrahmen 210 wieder aus dem Hubrahmen 107 entnommen und zur Aufnahme des nächsten Großsacks 220 verwendet.

Weitere Ausführungen und Varianten der Erfindung ergeben sich für den Fachmann im Rahmen der Patentansprüche.

## Patentansprüche

1. Greifanordnung (210) für die automatisierbare Handhabung von Großsäcken (220) mit mehreren verstellbaren Greifeinrichtungen (211), die verstellbar an einem Tragrahmen (210) angeordnet sind, zum Aufnehmen und Handhaben des Großsacks (220) an den Schlaufen (221),
Stelleinrichtungen (217) zum Einstellen der Greifeinrichtungen (211) bezüglich der erfassten Lage des Großsacks (220) und/oder der Greifzone (225; 226),
wobei die Greifeinrichtungen (211) mittels der Stelleinrichtung (217) zwischen einer Ruhelage (211R),
einer Greiflage (211G), in welcher das Tragmittel (221) an der erfassten Greifzone (225; 226) zur Handhabung des Großsacks (220) mit der Greifeinrichtung (211) aufnehmbar ist, und
einer Handhabungslage (211H) verstellbar sind, in welcher der Großsack (220) mittels der Greifeinrichtungen (211) handhabbar, insbesondere zwischen einem Vorratsstapel (300) und einer Füllstation (100) verfahrbar, ist,
jede Greifeinrichtung (211) einen Aktuator (234) und ein damit betätigbares Aufnahmemittel (235) aufweist, das zwischen einer Freigabestellung und einer Haltestellung verstellbar ist und zwei zueinander verstellbare Greifelemente (235; 235a), insbesondere Klemmbacken, umfasst,
**dadurch gekennzeichnet, dass** die Greifanordnung (210) eine Sensoranordnung (241,242,243) zum Erfassen der Lage des Großsacks (220) und der jeweiligen Lage einer Greifzone (225;226) an mehreren daran angeordneten Schlaufen (221) bezüglich des Großsacks (220) aufweist.

2. Greifanordnung (210) für die automatisierbare Handhabung von Großsäcken (220) mit mehreren verstellbaren Greifeinrichtungen (211), die verstellbar an einem Tragrahmen (210) angeordnet sind, zum Aufnehmen und Handhaben des Großsacks (220) an den Schlaufen (221),
Stelleinrichtungen (217) zum Einstellen der Greifeinrichtungen (211) bezüglich der erfassten Lage des Großsacks (220) und/oder der Greifzone (225; 226),
wobei die Greifeinrichtungen (211) mittels der Stelleinrichtungen (217) zwischen einer Ruhelage (211R),
einer Greiflage (211G), in welcher das Tragmittel (221) an der erfassten Greifzone (225; 226) zur Handhabung des Großsacks (220) mit der Greifeinrichtung (211) aufnehmbar ist, und
einer Handhabungslage (211H) verstellbar sind, in welcher der Großsack (220) mittels der Greifeinrichtungen (211) handhabbar, insbesondere zwischen einem Vorratsstapel (300) und einer Füllstation (100) verfahrbar, ist,
jede Greifeinrichtung (211) einen Aktuator (234) und ein damit betätigbares Aufnahmemittel (235) aufweist, das zwischen einer Freigabestellung und einer Haltestellung verstellbar ist und als verstellbarer Aufnahmehaken ausgebildet ist,
**dadurch gekennzeichnet, dass** die Greifanordnung (210) eine Sensoranordnung (241;242;243) zum Erfassen der Lage des Großsacks (220) und der jeweiligen Lage einer Greifzone (225;226) an mehreren daran angeordneten Schlaufen (221) bezüglich des Großsacks (220) aufweist.

3. Greifanordnung (210) nach Anspruch 1 oder 2, bei welcher der Aktuator (234) als über ein Getriebe mit dem Aufnahmemittel gekoppelter Antrieb, insbesondere ein Linearantrieb, ausgebildet ist.

4. Greifanordnung (210) nach Anspruch 3, bei welcher das Getriebe einen Kniehebelmechanismus (236) umfasst und derart mit dem Aufnahmemittel (235) zusammenwirkt, dass der Kniehebelmechanismus (236) das Aufnahmemittel in seiner Haltestellung sperrt.

5. Greifanordnung (210) nach Anspruch 1, bei welcher die Klemmbacken (235a) mit von Klemmkanten (240) ausgehenden Klemmplatten (241) versehen sind, die in der Haltestellung flach aneinander liegen.

6. Greifanordnung (210) nach Anspruch 5, bei welcher von den Klemmplatten (241) abgewinkelte Führungsflächen (243, 244 und 242) so ausgebildet sind, dass sie Abgleitbereiche bilden, an denen die Tragmittel (221) abgleiten, wenn die Klemmbacken (235a) ihre Freigabestellung einnehmen und die Tragmittel (221) freigeben.

7. Greifanordnung (210) nach einem der vorhergehenden Ansprüche, bei welcher die Stelleinrichtung (217) als Linearantrieb, insbesondere eine Stellzylinderanordnung (218, 230, 231) bzw. ein Spindelantrieb, und/oder Schwenkantrieb ausgebildet ist.

8. Greifanordnung (210) nach einem der vorhergehenden Ansprüche, bei welcher die Sensoreinrichtung (241, 243) derart ausgebildet ist, dass sie beim Verstellen der Greifeinrichtung (211) aus der Ruhelage in die Greiflage ein, die Greifzone (225; 226) des Tragmittels (211) vom Großsack (220) differenzierendes, Merkmal erfasst, insbesondere einen Farbunterschied, und damit die Lage der Greifzone (225; 226) bezüglich des Großsacks (220).

9. Greifanordnung (210) nach einem der Ansprüche 1 bis 8, bei welcher die Sensoreinrichtung als optischer Objekterkennungssensor (243) ausgebildet ist, welcher die jeweilige Lage der Greifzone (225; 226) mehrerer Schlaufen (221) bezüglich des Großsacks (220) erfasst.

10. Greifanordnung (210) nach einem der vorhergehenden Ansprüche, bei welcher eine Steuerung (216) vorgesehen ist, welche auf eine Lageinformation der Sensoranordnung (241, 243) ein entsprechendes Stellsignal an die Stelleinrichtung (217) abgibt, so dass diese die Greifeinrichtung (211) in ihre Greiflage (211G) bringt, und dann ein Stellsignal an den Aktuator (234) abgibt, so dass dieser das Aufnahmemittel (235) in seine Haltestellung bringt, in der die Greifeinrichtung (211) das Tragmittel (221) an der Greifzone (225, 226) aufnimmt.

## Claims

1. A gripping arrangement (210) for the automatable handling of large bags (220), comprising a plurality of adjustable gripping devices (211), which are adjustably arranged on a support frame (210), for picking up and handling the large bag (220) at the loops (221),
adjusting devices (217) for adjusting the gripping devices (211) with respect to the detected position of the large bag (220) and/or the gripping zone (225; 226),
wherein the gripping devices (211) are adjustable by means of the adjusting device (217) between a rest position (211R),
a gripping position (211G), in which the carrying unit (221) can be received at the detected gripping zone (225; 226) for handling the large bag (220) by means of the gripping device (211), and
a handling position (211H), in which the large bag (220) can be handled by means of the gripping devices (211), in particular between a supply stack (300) and a filling station (100), and
each gripping device (211) has an actuator (234) and a receiving unit (235) which can be actuated therewith and which is adjustable between a release position and a holding position and comprises two mutually adjustable gripping elements (235; 235a), in particular clamping elements, **characterized in that** the gripping arrangement (210) comprises a sensor arrangement (241, 242, 243) for detecting the position of the large bag (220) and the respective position of a gripping zone (225; 226) at a plurality of loops (221) arranged thereon with respect to the large bag (220).

2. The gripping arrangement (210) for the automatable handling of large bags (220), comprising a plurality of adjustable gripping devices (211), which are adjustably arranged on a support frame (210), for picking up and handling the large bag (220) on the loops (221),
adjusting devices (217) for adjusting the gripping devices (211) with respect to the detected position of the large bag (220) and/or the gripping zone (225; 226),
wherein the gripping devices (211) are positioned by means of the adjusting devices (217) between a rest position (211R),
a gripping position (211G), in which the carrying unit (221) can be received at the detected gripping zone (225; 226) for handling the large bag (220) by means of the gripping device (211), and
a handling position (211H), in which the large bag (220) can be handled by means of the gripping devices (211), in particular between a supply stack (300) and a filling station (100), and
each gripping device (211) comprises an actuator (234) and a pick-up unit (235), which can be actuated therewith and which is adjustable between a release position and a holding position and is designed as an adjustable receiving hook,
**characterized in that** the gripping arrangement (210) comprises a sensor arrangement (241; 242; 243) for detecting the position of the large bag (220) and the respective position of a gripping zone (225; 226) at a plurality of loops (221) arranged thereon with respect to the large bag (220).

3. The gripping arrangement (210) according to claim 1 or 2, in which the actuator (234) is designed as a drive coupled to the receiving unit by means of a gearing, in particular a linear drive.

4. The gripping arrangement (210) according to claim 3, in which the gearing comprises a toggle lever mechanism (236) and cooperates with the receiving unit (235) in such a way that the toggle lever mechanism (236) blocks the receiving unit in its holding position.

5. The gripping arrangement (210) according to claim 1, in which the clamping jaws (235a) are provided with clamping plates (241) extending from clamping edges (240), which lie flat against each other in the holding position.

6. The gripping arrangement (210) according to claim 5, in which guide surfaces (243, 244 and 242) angled from the clamping plates (241) are designed in such a way that they form sliding areas on which the supporting units (221) slide when the clamping jaws (235a) adopt their release position and release the supporting units (221).

7. The gripping arrangement (210) according to any of the preceding claims, in which the adjusting device (217) is designed as a linear drive, in particular an adjusting cylinder arrangement (218, 230, 231) or a spindle drive, and/or a swivel drive.

8. The gripping arrangement (210) according to any of the preceding claims, in which the sensor device (241, 243) is designed in such a way that, when the gripping device (211) is adjusted from the rest position into the gripping position, it detects a feature differentiating the gripping zone (225; 226) of the supporting unit (221) from the large bag (220), in particular a color difference, and thus the position of the gripping zone (225; 226) with respect to the large bag (220).

9. The gripping arrangement (210) according to any of claims 1 to 8, in which the sensor device is designed as an optical object recognition sensor (243), which detects the respective position of the gripping zone (225; 226) of a plurality of loops (221) with respect to the large bag (220).

10. The gripping arrangement (210) according to any of the preceding claims, in which a controller (216) is provided, which emits a corresponding adjusting signal to the adjusting device (217) in response to position information of the sensor arrangement (241, 243), so that the adjusting device brings the gripping device (211) into its gripping position (211G), and then emits an adjusting signal to the actuator (234), so that the latter brings the receiving unit (235) into its holding position, in which the gripping device (211) receives the supporting unit (221) at the gripping zone (225, 226).

## Revendications

1. Dispositif de préhension (210) pour la manipulation automatisée de sacs de grande contenance (220) comprenant plusieurs dispositifs de préhension (211) réglables, lesquels sont montés réglables sur un cadre de support (210), pour saisir et manipuler le sac de grande contenance (220) au niveau des sangles (221),
des dispositifs de réglages (217) pour le réglage des dispositifs de préhension (211) par rapport à la position détectée du sac de grande contenance (220) et/ou de la zone de préhension (225 ; 226),
dans lequel les dispositifs de préhension (211) peuvent être déplacés par le dispositif de réglage (217) entre une position de repos (211R),
une position de préhension (211G), dans laquelle le moyen de support (221) au niveau de la zone de préhension (225 ; 226) détectée peut être saisi par le dispositif de préhension (211) pour la manipulation du sac de grande contenance (220), et
une position de manipulation (211H), dans laquelle le sac de grande contenance (220) peut être manipulé, en particulier déplacé entre une pile de stockage (300) et une station de chargement (100), par les dispositifs de préhension (211),
chaque dispositif de préhension (211) comprend un actionneur (234) et un moyen de saisi (235) pouvant être actionné par celui-ci, lequel moyen de saisi (235) peut être déplacé entre une position de dégagement et une position de retenue et comprend deux éléments de préhension (235 ; 235a) ajustables l'un par rapport à l'autre, en particulier des mâchoires de serrage,
**caractérisé en ce que** le dispositif de préhension (210) comprend un dispositif capteur (241, 242, 243) pour détecter la position du sac de grande contenance (220) et la position respective d'une zone de préhension (225 ; 226) au niveau de plusieurs sangles (221) disposées sur celui-ci par rapport au sac de grande contenance (220).

2. Dispositif de préhension (210) pour la manipulation automatisée de sacs de grande contenance (220) comprenant plusieurs dispositifs de préhension (211) réglables, lesquels sont montés réglables sur un cadre de support (210), pour saisir et manipuler le sac de grande contenance (220) au niveau des sangles (221),
des dispositifs de réglages (217) pour le réglage des dispositifs de préhension (211) par rapport à la position détectée du sac de grande contenance (220) et/ou de la zone de préhension (225 ; 226),
dans lequel les dispositifs de préhension (211) peuvent être déplacés par le dispositif de réglage (217) entre une position de repos (211R),
une position de préhension (211G), dans laquelle le moyen de support (221) au niveau de la zone de préhension (225 ; 226) détectée peut être saisi par le dispositif de préhension (211) pour la manipulation du sac de grande contenance (220), et
une position de manipulation (211H), dans laquelle le sac de grande contenance (220) peut être manipulé, en particulier déplacé entre une pile de stockage (300) et une station de chargement (100), par les dispositifs de préhension (211),
chaque dispositif de préhension (211) comprend un actionneur (234) et un moyen de saisi (235) pouvant être actionné par celui-ci, lequel moyen de saisi (235) peut être déplacé entre une position de dégagement et une position de retenue et est un crochet de saisie réglable,
**caractérisé en ce que** le dispositif de préhension (210) comprend un dispositif capteur (241, 242, 243) pour détecter la position du sac de grande contenance (220) et la position respective d'une zone de préhension (225 ; 226) au niveau de plusieurs sangles (221) disposées sur celui-ci par rapport au sac de grande contenance (220).

3. Dispositif de préhension (210) selon les revendications 1 ou 2, dans lequel l'actionneur (234) est un dispositif d'entraînement relié, par l'intermédiaire d'une transmission, au moyen de saisi, en particulier un dispositif d'entraînement linéaire.

4. Dispositif de préhension (210) selon la revendication 3, dans lequel la transmission comprend un mécanisme à genouillère (236) et coopère de telle sorte avec le moyen de saisi (235) que le mécanisme à genouillère (236) bloque le moyen de saisi dans sa position de retenue.

5. Dispositif de préhension (210) selon la revendication 1, dans lequel les mâchoires de serrage (235a) sont pourvues de plaques de serrage (241) partant d'arêtes de serrage (240), lesquelles plaques de serrage (241), en position de retenue, sont disposées à plat l'une contre l'autre.

6. Dispositif de préhension (210) selon la revendication 5, dans lequel des surfaces de guidage (243, 244 et 242) formant un angle vers l'extérieur par rapport au plaques de serrage (241) sont formées de telle sorte qu'elles formes des zones de glissement, au niveau desquelles les moyens de support (221) glissent lorsque les mâchoires de serrage (235a) occupent leur position de dégagement et libèrent les moyens de support (221).

7. Dispositif de préhension (210) selon l'une des revendications précédentes, dans lequel le dispositif de réglages (217) est un dispositif d'entraînement linéaire, en particulier un dispositif de vérin de réglage (218, 230, 231) ou un dispositif d'entraînement à vis, et/ou un dispositif d'entraînement en rotation.

8. Dispositif de préhension (210) selon l'une des revendications précédentes, dans lequel le dispositif capteur (241, 243) est conçu de telle sorte que, lorsque le dispositif de préhension (211) est déplacé de la position de repos vers la position de préhension, le dispositif capteur (241, 243) détecte une caractéristique distinguant la zone de préhension (225 ; 226) du moyen de support (221) du sac de grande contenance (220), en particulier une différence de couleur, et ainsi la position de la zone de préhension (225 ; 226) par rapport au sac de grande contenance (220).

9. Dispositif de préhension (210) selon l'une des revendications 1 à 8, dans lequel le dispositif capteur (241, 243) est un capteur optique de reconnaissance d'objets (243) lequel détecte la position respective de la zone de préhension (225 ; 226) de plusieurs sangles (221) par rapport au sac de grande contenance (220).

10. Dispositif de préhension (210) selon l'une des revendications précédentes, dans lequel est prévu un dispositif de commande (216) lequel, en réponse à une information de position du dispositif capteur (241, 243), émet un signal de commande correspondant vers le dispositif de réglages (217), de sorte à ce que celui-ci amène le dispositif de préhension (211) dans sa position de préhension (211G), et émet ensuit un signal de commande vers l'actionneur (234), de sorte à ce que celui-ci amène le moyen de saisi (235) dans sa position de retenue, dans laquelle le dispositif de préhension (211) saisit le moyen de support (221) au niveau de la zone de préhension (225 ; 226).
